# EUROPEAN PATENT SPECIFICATION

(11) **EP 1 629 917 B1**
(45) Date of publication and mention of the grant of the patent: **12.12.2012**
(21) Application number: 05445058.0
(22) Date of filing: 01.07.2005
(51) Int. Cl.: B23C 5/00, B23C 5/22

(54) **Insert seat**
Schneideinsatz-Aufnahme
Logement pour plaquettes

(30) Priority: 30.08.2004 SE 0402102
(43) Date of publication of application: 01.03.2006
(73) Proprietor: Sandvik Intellectual Property AB, 811 81 Sandviken (SE)
(72) Inventor: Wallström, Lars-Gunnar, 811 52 Sandviken (SE); Wihlborg, Lennart, 816 31 Ockelbo (SE)
(74) Representative: Taquist, Henrik Lennart Emanuel

(56) References cited:
- WO-A-00/23218
- WO-A-2004/060595
- SE-C2- 505 511

## Description

### Technical Field of the Invention

The present invention relates to a tool body for chip-removing machining according to the preamble of claim 1, including an insert seat being intended to receive a cutting insert and being confined by a bottom surface and support surfaces, extending along a part of a circumference defined by the bottom surface, said support surfaces comprising at least three ridges and grooves therebetween.

### State of the Art

By SE-C-505 511, a milling cutter body and a method for the manufacture of said milling cutter body are previously known. A characteristic feature of said milling cutter body is that the lateral support of the insert seat is manufactured by means of a ball nose end mill. Thereby, a number of grooves are formed having intermediate ridges. This constructive design is illustrated below in Fig. A.

### Objects and Features of the Invention

A primary object of the present invention is to provide a tool body having an insert seat of the kind defined above, the support surfaces belonging to each insert seat being formed to give optimal support to the cutting insert mounted in the insert seat.

Another object of the present invention is to secure that the prestress imparted to a cutting insert upon mounting in an insert seat should remain to a substantial extent also after a certain time of use of the cutting insert.

Yet an object of the invention is to improve the positioning of the cutting insert in the insert seat, more specifically by limiting the displacement of the cutting insert from an initial position.

Another object of the present invention is to make it possible to manufacture the insert seat in an effective way.

At least the primary object of the present invention is realized by means of a tool body having the features defined in the appended independent claim.

### Brief Description of the Drawings

Below, prior art and an embodiment of the invention will be described, reference being made to the accompanying drawings, in which:
- Fig. A: is a schematic section through a part of an insert seat of a tool body according to prior art, the abutment of the cutting insert against the support surfaces of the insert seat being shown in detail;
- Fig. 1: is a perspective view of a tool body having an insert seat according to the present invention
- Fig. 2: is a front view of an insert seat according to the present invention;
- Fig. 3: is a front view of a cutting insert received in the insert seat;
- Fig. 4: is a section IV-IV in Fig. 3;
- Fig. 5: is a schematic section in the axial direction through an insert seat having a cutting insert mounted therein, an initial position of the mounting being shown; and
- Fig. 6: is a similar section through an insert seat having a cutting insert the position of which is shown after a certain wearing-in.

### Detailed Description of Prior Art and a Preferred Embodiment of the Invention

From the section shown in Fig. A through a part of an insert seat of a tool body according to prior art, it is seen that the cutting insert S abuts against support surfaces of the insert seat, these support surfaces being in the shape of ridges C, which have been produced by providing the side surface of the insert seat with a number of grooves E. In the example shown, the number of grooves is two and the number of ridges three. An insert seat of this type is disclosed in above-mentioned SE-C-505 511. The cutting insert S is mounted with a certain prestress in the insert seat.

The height of the ridges C or the depth of the grooves E, i.e., the distance from the bottom of the grooves E to the peak of the ridges C, has been designated D and the width of the grooves E, i.e., the distance between adjacent ridges C, has been designated B.

In the embodiment of prior art shown in Fig. A, the cutting insert S abuts against two ridges C, abutment normally being effected only in relation to a limited length of the ridges C, namely the portions that are located in the area of the free ends of the support surfaces. A problem with the insert seat shown in Fig. A is that, after a certain time of use, a wearing-in of the cutting insert S in relation to the ridges C takes place. This means that the ridges C are flattened and the cutting insert S is imparted a displacement to the right in Fig. A. Since the grooves E have a relatively large depth D, which normally is in the interval of 0,02 ≤ D ≤ 0,07 mm, this displacement will result in the prestress becoming considerably reduced or even eliminated. This is an extraordinarily significant disadvantage as for the fixation/positioning of the cutting insert S in the insert seat. The width B of the grooves D is normally in the interval of 0,7 ≤ B ≤ 1, 2 mm.

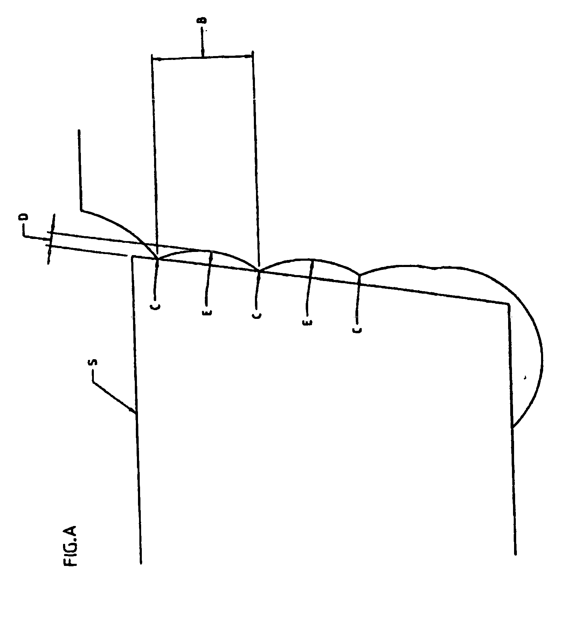

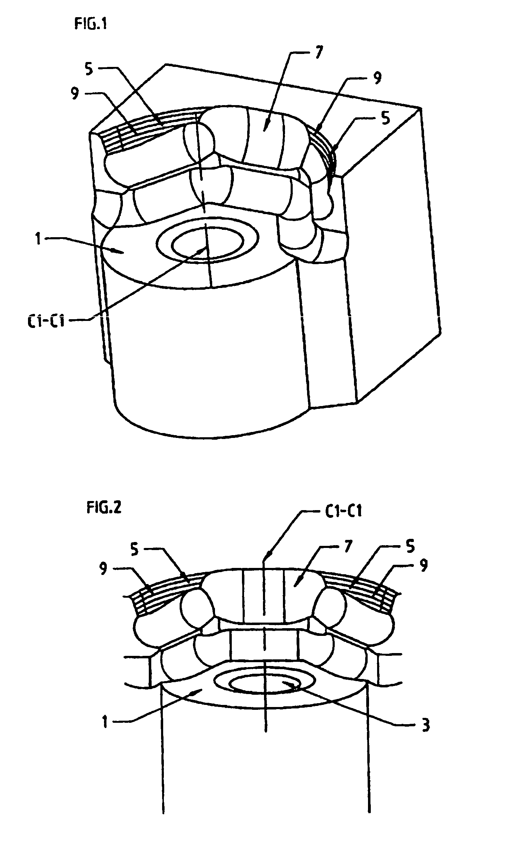

The insert seat of the tool body according to the present invention shown in Figs. 1 and 2 comprises a bottom surface 1, for carrying a cutting insert applied in the insert seat. In the embodiment illustrated, the bottom surface 1 has a generally circular shape. In the centre of the bottom surface 1, an internally threaded first centre hole 3 is arranged, which is intended to receive a screw for anchoring a cutting insert (not shown) in the insert seat. A first centre axis C1-C1 of the first centre hole 3 defines an axial direction of the insert seat. The insert seat shown in Figs. 1 and 2 also comprises two support surfaces 5, which are located at a certain distance from the bottom surface 1 as seen in the axial direction C1-C1. Between the support surfaces 5, there is a clearance surface 7. As seen in Figs. 1 and 2, the support surfaces 5 have a number of ridges 9, which, according to the shown embodiment, generally are located in planes that are parallel to the bottom surface 1 of the insert seat, i.e., the planes have an extension along the bottom surface 1. In the embodiment shown in Figs. 1 and 2, the insert seat is provided with four ridges 9, which in the embodiment illustrated are mutually parallel. Normally, the portions of the insert seat located between the side surfaces 5 and the bottom surface 1 do not exert any supporting function on a cutting insert mounted in the insert seat. The corresponding applies also for the portions of the insert seat located between the clearance surface 7 and the bottom surface 1.

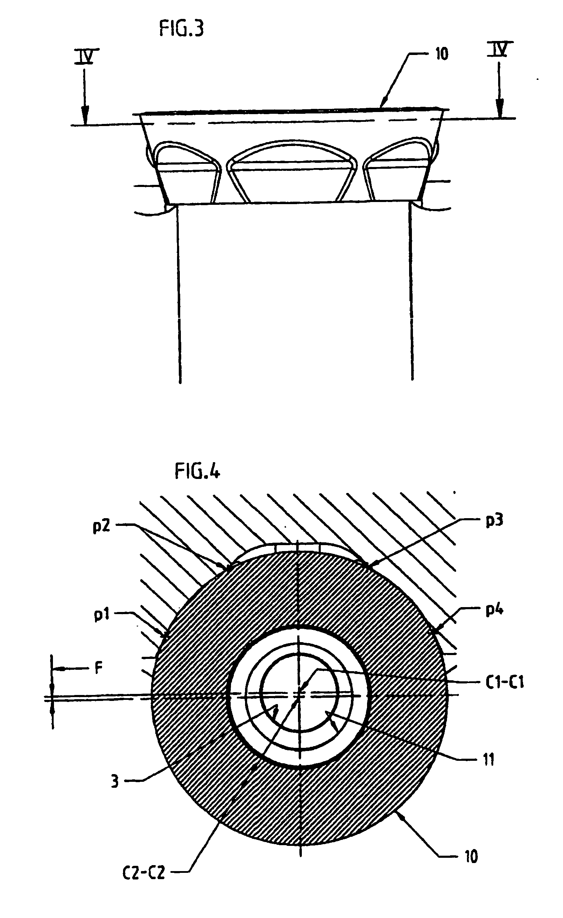

Now reference is made to Figs. 3 and 4, showing how a cutting insert 10 for chip-removing machining is received in the insert seat of figs 1 and 2. The cutting insert 10 is provided with a second centre hole 11 for the receipt of a screw for the clamping of the cutting insert 10 in the insert seat. As is most clearly seen in Fig. 4, the uppermost located ridges 9 of the support surfaces 5 have, in planar view, a radius of curvature of the same nominal value as the radius of curvature of the part of the cutting insert that abuts against the respective ridge 9. The corresponding applies also for the other ridges 9 included in the support surfaces 5. This means that linear abutment, on one hand between the points p1 and p2 and on the other hand between the points p3 and p4, initially takes place between the ridges 9 and the cutting insert 10. The clearance surface 7 does not abut against the cutting insert 10. The portions of the insert seat located outside the points p1 and p4 do not abut against the cutting insert 10.

The cutting insert 10 is mounted in the insert seat by means of a certain prestress. This is illustrated in Fig. 4 by the measure F, which is the distance between the first centre axis C1-C1 of the first centre hole 3 in the insert seat and a second centre axis C2-C2 of the second centre hole 11 in the cutting insert 10. Normally, the measure F should be in the interval of 0,1 ≤ F ≤ 0,3, mm with a preferred interval of 0,15 ≤ F ≤ 0,25 mm.

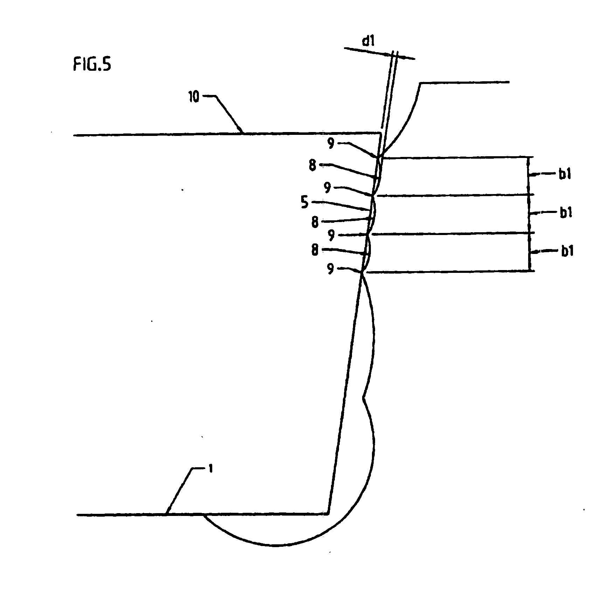

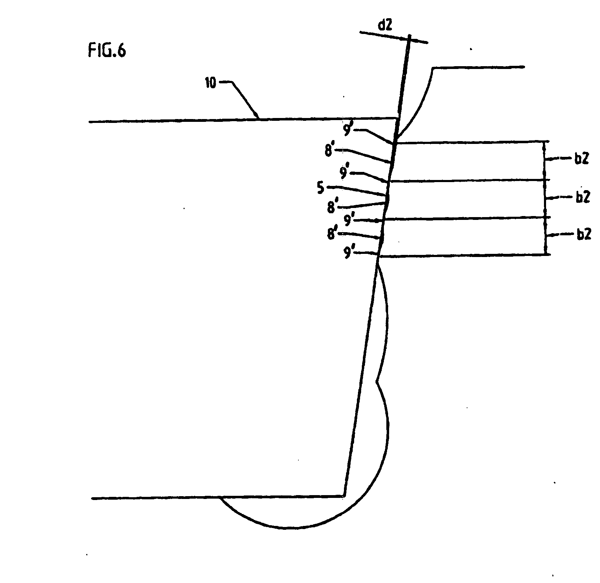

In Figs. 5 and 6, it is illustrated how the cutting insert 10 co-operates with a support surface 5 in an insert seat according to the present invention. In Figs. 5 and 6, it is seen that a support surface 5 is arranged in the insert seat, at a certain distance from the bottom surface 1. As has been pointed out above, the support surface 5 comprises three grooves 8, which generate four ridges 9. In the section shown in Fig. 5, the ridges 9 lie on a straight line, which in turn is situated in the side surface of the cutting insert 10 that abuts against the ridges 9. In Fig. 5, the initial depth of the grooves 8 is designated d1 and the initial width of the grooves 8 is designated b1. The initial depth d1 should be in the interval of 0,003 ≤ d1 ≤ 0,015 mm with a preferred value of 0,003 ≤ d1 ≤ 0,01. The initial width b1 should be in the interval of 0,1 ≤ b1 ≤ 0,4 mm with a preferred value of 0,25 ≤ b1 ≤ 0,35.

After a certain time of use of the tool that is provided with the insert seat according to the present invention, a wearing-in of the cutting insert 10 in relation to the support surface 5 will occur. Thereby, the ridges 9 will be deformed to a certain extent, i.e., a flattening of the ridges 9 takes place. This is illustrated in Fig. 6, the grooves having been given the reference designation 8' and the flattened ridges the reference designation 9'. Thus, a displacement of the cutting insert 10 has occurred in the direction towards the side surface 5, which has entailed that the depth of the grooves 8' has decreased. This reduced depth has been attributed the reference designation d2. As for the width of the grooves 8', this has been attributed the reference designation b2, this measure being somewhat smaller than the measure b1. The flattening of the ridges 9' generally entails a greater friction between the side surface 5 and the cutting insert 10. This prevents the cutting insert 10 from rotating in the insert seat thereof.

A basic idea of the present invention is that even if a displacement of the cutting insert 10 takes place in the insert seat because of deformation of the ridges 9, there should still remain a satisfactory prestress that urges the cutting insert 10 against the support surface 5. From a theoretical point of view, the deformation could progress so far that the ridges 9 are entirely obliterated, i.e., the side surface 5 becomes planar. In practice, tendencies to such a scenario should not occur before the load is greater than the recommended load, wherein in that respect this should be understood as the forces acting on the cutting insert. If there are tendencies to the above-described scenario, the displacement of the cutting insert 10 will at most be of the order of 0,01 mm. This should be compared with the prestress F that above has been attributed a smallest value of 0,1 mm. Thus, there is a satisfactory margin in the relation between prestress and maximum displacement of the cutting insert 10.

The grooves 9 in the support surfaces 5 are manufactured by means of ball nose end mills, the dimensions of the grooves 9, for instance depth and width, being determined on one hand by the dimensions of the milling cutter and on the other hand by the cutting depth thereof. The diameter of the ball nose end mill is normally in the interval of 1-6 mm.

### Feasible Modifications of the Invention

In the sections shown above in Figs. 5 and 6, the support surface 5 has four ridges 9 and three grooves 8 defined between the ridges 9. However, the invention is in no way limited to the number of ridges and grooves shown in Figs. 5 and 6. Thus, within the scope of the invention, three or more ridges are conceivable.

The present tool body is primarily provided for milling cutters for chip-removing machining. However, the concept of the invention is general and may be used also in other types of tool bodies for chip-removing machining. For exemplifying and not limiting purpose, turning tools and drills may be mentioned. In that connection, the cutting inserts may also have a different geometry than the one shown in the drawings. For exemplifying, but not limiting, purpose, rectangular cutting inserts, rhombic cutting inserts and triangular cutting inserts may be mentioned. The cutting inserts may be both positive and negative.

In the description above, the expression has been used that the ridges extend along the plane in which the bottom surface 1 is situated. With this formulation, in the present context, it should be appreciated that the ridges do not need to extend parallel to the bottom surface 1 but that a certain angle may be present between the longitudinal direction of the ridges and the plane in which the bottom surface 1 is situated. Generally it applies that the ridges, in principle, may extend arbitrarily within the circumference defined by the side surface, but it is advisable that there is a mutual coordination between the ridges as for the extension thereof in the side surface. For exemplifying and not limiting purpose, it may be mentioned that the ridges may have a diagonal extension in the side surface.

In the description above, the ridges 9 are arched and located in a plane. The reason therefore is of course that the ridges should have a shape adapted to the cutting insert 10. However, within the scope of the present invention it is also conceivable that the ridges are rectilinear instead of arched, the side surfaces in the insert seat then being generally planar. Furthermore, it is conceivable that the ridges, for instance, are sinusoidal in the longitudinal direction thereof.

## Claims

1. Tool body for tools for chip-removing machining, including an insert seat being intended to receive a cutting insert (10) and being confined by a bottom surface (1) and support surfaces (5), extending along a part of a circumference defined by the bottom surface (1), said support surfaces (5) comprising at least three ridges (9) with grooves (8) therebetween, the grooves being manufactured by means of a ball nose end mill imparting a concavely arched shape thereto, c h a r a c t e r i z e d in that the grooves (9) have a depth (d1) being at least 0,003 mm and no greater than 0,015 mm, and a width (b1) in the interval of 0,1 ≤ b1 ≤ 0,4 mm.

## Patentansprüche

1. Werkzeugkörper für Werkzeuge für die spanabhebende Bearbeitung, mit einem Sitz für einen Einsatz, der dafür vorgesehen ist, einen Schneideinsatz (10) aufzunehmen und der durch eine Bodenfläche (1) und Stützflächen (5) begrenzt wird, die sich entlang eines Teiles eines Umfanges erstrecken, welcher durch die Bodenfläche (1) definiert wird, wobei die Stützflächen (5) zumindest drei Rippen (9) mit Nuten (8) dazwischen aufweisen, wobei die Nuten mit Hilfe eines Kugelkopffräsers hergestellt sind, der diesen eine konkav gekrümmte Form gibt, **dadurch gekennzeichnet, dass** die Nuten (9) eine Tiefe (d1) haben, die zumindest 0,003 mm und nicht mehr als 0,015 mm betragen sowie eine Breite (b1) in dem Intervall von 0,1 ≤ b1 ≤ 0,4 mm haben.

## Revendications

1. Corps d'outil pour outils servant à l'usinage par enlèvement de copeaux, comprenant un logement de plaquette prévu pour recevoir une plaquette de coupe (10) et étant confiné par une surface inférieure (1) et des surfaces de support (5), s'étendant le long d'une partie d'une circonférence définie par la surface inférieure (1), lesdites surfaces de support (5) comprenant au moins trois crêtes (9) avec des rainures (8) entre elles, les rainures étant fabriquées au moyen d'une fraise à queue à rainurer communiquant une forme arquée de manière concave à ces dernières, **caractérisé en ce que** les rainures (9) ont une profondeur (dl) qui est d'au moins 0,003 mm et non supérieure à 0,015 mm, et une largeur (b1) dans l'intervalle de 0,1 ≤ b1 ≤ 0,4 mm.
